# EUROPEAN PATENT SPECIFICATION

(11) **EP 2 723 635 B1**
(45) Date of publication and mention of the grant of the patent: **27.03.2019**
(21) Application number: 12730203.2
(22) Date of filing: 21.06.2012
(51) Int. Cl.: B63H 21/17, B63H 23/24, B63J 3/02

(54) **SHIP PROPULSION**
SCHIFFSANTRIEB
PROPULSION DE NAVIRE

(30) Priority: 22.06.2011 EP 11170983
(43) Date of publication of application: 30.04.2014
(73) Proprietor: Wärtsilä Finland Oy, 65101 Vaasa (FI)
(72) Inventor: HYSTAD, Egil, FI-65101 Vaasa (FI); DJUVE, Svein, FI-65101 Vaasa (FI)
(74) Representative: TBK
(86) International application number: PCT/EP2012/061994
(87) International publication number: WO 2012/175624

(56) References cited:
- EP-A2- 0 058 037
- WO-A1-2007/124968
- WO-A2-2009/030807
- DE-A1- 3 705 310
- DE-A1- 3 836 418
- JP-A- 61 102 148
- JP-A- 62 090 714
- RU-C1- 2 110 440
- RU-C1- 2 110 441
- SU-A1- 1 699 862
- US-A1- 2004 102 109

## Description

### TECHNICAL FIELD

The invention relates to an arrangement for achieving an improvement in ship propulsion engine fuel efficiency.

### BACKGROUND

An example for a general propulsion system for a vessel is shown in WO 2009/030807 A2.

Document RU 2 110 441 C1, which constitutes the closest prior art, discloses a marine electric power plant, wherein two generators are driven by diesel engines. One of the diesel engines is connected to one of the generators by means of a clutch, so that it can be disconnected from the diesel engine in order to realize a phase shifting operation.
The Market, ship-owners and authorities call for reduced emissions and increased efficiency in ship propulsion systems. One important aspect in this goal is to keep a highest possible (or close to optimum) load on the gensets and avoid fluctuations in this load as much as possible in all operation modes.
Ship propulsion engines suffer from fluctuating power needs at typically constant rotation speeds, which results in a fuel efficiency drop when the power need is not meeting the optimal power/rpm combination.
Typically, engine fuel efficiency drops very drastically immediately when the engine running condition deviates from the optimised combination of power and running speed either by fluctuating power need and constant speed or by fluctuating speed and constant power need.

### SUMMARY OF INVENTION

The object of this invention is to improve fuel efficiency by creating improved running conditions for the ship engine.

This object is solved by a propulsion system for a vessel as defined in claim 1, or alternatively by a method as defined in claim 7.

Advantageous developments are set out in the dependent claims.

Thus, invention improves the fuel efficiency of the ship by keeping the engine fuel consumption optimal in relationship to the electricity production of a genset (engine and electric generator) by means of storing excessive energy in an energy storage and releasing it from there when the energy consumption is higher than optimal electricity production capacity of the genset, wherein one electric generator is used as a phase compensator (first embodiment), or by means of adjusting the rotational speed of the engine of the genset following the electric power consumption and at the same time keeping the generator speed constant (second embodiment).

The first embodiment includes the use of an energy storage into which the excess electric energy is charged and from which the charged electric energy is released according to the need of a ship power network in a manner which lowers the engine load fluctuation and improves thereby the fuel efficiency of the engine.

The second embodiment of the invention includes the use of a mechanical or electrical transmission between the engine and generator or propulsion shaft in order to enable the engine to run at lower than nominal speed when the energy need of the ship propulsion system or ship electrical network is lower than the nominal power of the engine and thereby allow the engine to run in higher fuel efficiency rate and at the same time keep the generator speed constant to produce the electricity in the nominal ship network frequency.

### SHORT DESCRIPTION OF THE DRAWINGS

In the following, embodiments of the invention are described by referring to the attached drawings, in which:
Fig. 1 shows an overview over a propulsion system for a vessel according to a first embodiment of the present invention,
Fig. 2 shows a modified propulsion unit of the propulsion system according to the first embodiment of the present invention, and
Fig. 3 shows a controller according to the first embodiment,
Fig. 4 shows a modified example for a propulsion system according to the second embodiment of the present invention

### DETAILED DESCRIPTION OF THE EMBODIMENTS OF INVENTION

### First Embodiment

In the following, a general overview over the first embodiment is given.

In particular, according to the first embodiment, an energy-storage assisted engine fuel efficiency improvement method and system is provided as follows:
The engine fuel efficiency improvement method and system include the periodical or irregular balancing of ship network electrical power by
- storing excess electrical power in an energy storage such as a supercapacitor or a secondary battery when the generator produces electric power in excess for the instantaneous needs of the ship,
- taking needed additional energy from the energy storage for the use of the ship electricity network when the electric generator produces electric power instantaneously insufficiently, and
- operating the generator of one of the two generator sets as a phase compensator for supplying reactive power to the propulsion system.

A general example for a propulsion system according to the first embodiment of the present invention is in the following:
The propulsion system for a vessel according to this example for the present embodiment comprises at least two generator sets, each including an prime mover and a generator, an electric propulsion unit and an energy storage, a main switchboard by which the at least two generator sets, the electric propulsion unit and the energy storage are connected to each other, and a controller for controlling the propulsion system. The controller carries out the functions as described above.

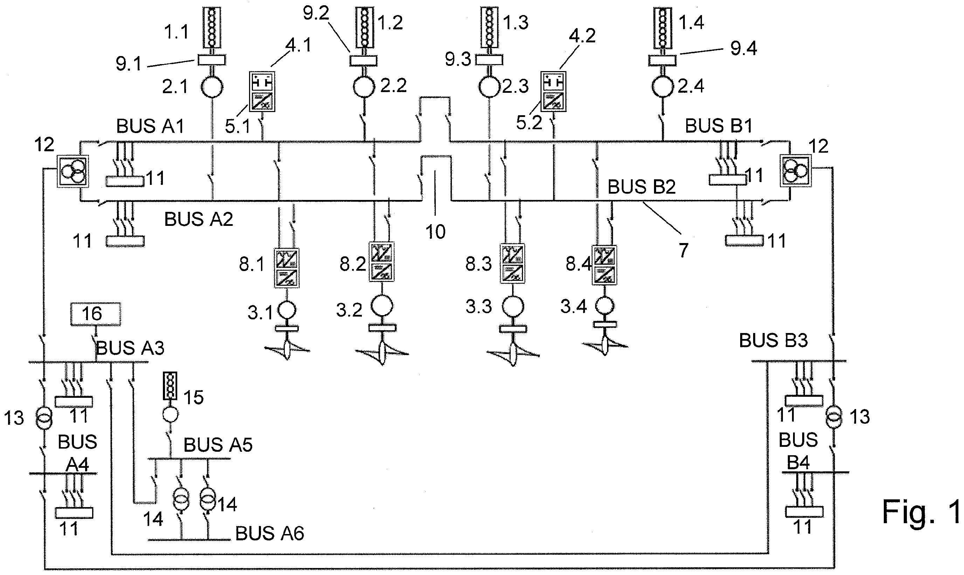

In the following, some examples are described by referring to Fig. 1, which shows a propulsion system for a vessel according to the first embodiment. This system comprises generator sets comprising of internal combustion engines 1.1 to 1.4 (as examples for a prime mover) and generators 2.1 to 2.4. In each of the generators sets, the internal combustion engine is connected with the generator by a clutch 9.1 to 9.4. The generators are connected with a main switchboard 7 which consists of busses A1, A2, B1 and B2. In this example, the main switchboard may operate with 690 V and 60 Hz. The busses A1 and A2 on the one hand and the busses B1 and B2 on the other hand may be connected or disconnected via a bus link 10. Furthermore, batteries 4.1 and 4.2 are connected via inverters 5.1 and 5.2 with the main switchboard 7. In addition, propulsion units 3.1 to 3.4 (comprising an electric motor and a propeller connected thereto via a transmission or a clutch) are connected to the main switchboard 7 via inverters 8.1 to 8.4. In this example, the propulsion units 3.2 and 3.3 are main propulsion thrusters operating with up to 2300 kW, whereas the propulsion units 3.1 and 3.4 operate with up to 1100 kW. It is noted that all connections of the above elements are realized via switches, as shown in the drawing.

Fig. 1 shows some additional elements provided in such a system, for example further busses, shore connections and the like. For example, transformers 12 (1600 kVA) are provided for the busses A1 and A2, and for the busses B1 and B2, via which further busses A3, A4, B3 and B4 operating on different voltages are connected. The busses A3 and B3 may operate on 450 V, whereas the busses A4 and B4 operate on 230 V. The busses A3 and A4 and the busses B3 and B4 are be connected via transformers 13 (99kVA). With the busses, several feeders 11 may be connected. Moreover, in this example a shore connection 16 is provided at the bus A3. A further bus A5 (operating on 440 V)is connected to bus A3. To this bus, a generator set 15 comprising an engine and a generator is connected, this generator being an emergency generator (Em Gen), and a further bus A6 (operating on 230 V) is connected to the bus A5 via two transformers 14 (operating with 50 kVA each). Moreover, the busses A3 and B3, and also the busses A4 and B4 are connectable.

### Example 1 - Battery assisted no-break system to be used in DP (Dynamic Positioning) vessels (Fig. 1)

A multi engine DP vessel is operated in DP (Dynamic Position) mode by one engine running in parallel with a de-clutched generator and one or more energy-storage/active-rectifier assemblies. The active rectifier includes a AC-DC/DC-AC converter receiving electric energy from the power network in network voltage and frequency and providing it back from the energy storage to power the power network in the network voltage and frequency. During shutdown of the engine, the energy storage provides necessary power to the consumers while the de-clutched generator controls the voltage, the kVAr dynamic and provides the necessary short circuit current.

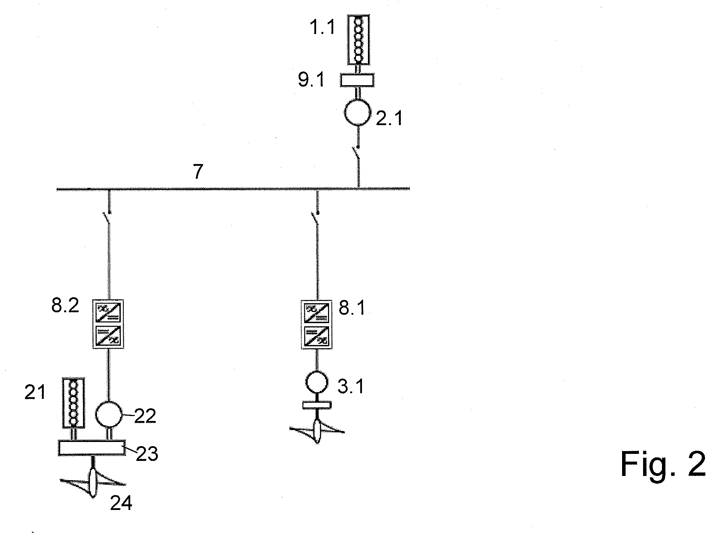

### Example 2 - Island Mode, active rectifier and rotating synchronous generator (Fig. 2)

### Setup:

Engine has nominal fuel efficiency of about 50%, propeller is attached to it through a mechanical gearbox or directly on the shaft. When engine rpm and load stay steady, the fuel efficiency stays at a very high level.

### Problem:

A ship going through waves generates almost sinusoidal load variation to the propulsion system which alters around the nominal load in calm sea. The engine fuel efficiency lowers very drastically when the load alters from the nominal load, which increases the actual fuel need from the nominal significantly.

### Solution:

When the engine load caused by the propeller is lowered under the nominal steady load level, the engine is additionally loaded by charging of a fast chargeable energy storage such as a supercapacitor (designated with "ACTIVE POWER" in Fig. 2) by a generator coupled with the engine shaft. When the engine load from the propulsion reaches the level above the nominal load, the engine is supported by releasing the power from the energy storage resulting that the load of the engine remains steady and the fuel efficiency as well.

In more detail, Fig. 2 shows an example for a propulsion unit according to this example of the first embodiment. As shown, the propulsion unit differs from the propulsion unit 3.2 in Fig. 1 in that not only an electric motor 22 (which is in this case a generator/motor unit) is coupled to the propeller (main propulsion thruster), but also an engine 21, and the engine and the motor may be coupled with the propeller 24 via a two-speed clutch 23. In this way, the generator/motor can support the engine, but, in addition, due to the generator function of the generator/motor, also electric power can be generated in case only small propulsion power is needed. The remaining elements shown in Fig. 2 are similar to those shown in Fig. 1.

The generator can be coupled to the propulsion system by a gearbox or it can be of the type shaft generator/motor located on the propeller shaft or on the engine connected to the crankshaft.

The generator can also be used to produce continuously current for the ship power network. In this case the power output of the generator is altered so that it results again for even the load to the propulsion engine of the ship.

An Island Mode (i.e., in which the vessel produces its own propulsion power without a shore connection) can be realised by:
- variable frequency generator (maybe shaft or gear mounted)
- Active rectifier - DC link and inverter
- generator-clutch-engine assembly
- main switchboard
- power management functionality

The electric consumers are supplied from the main switchboard, wherein active power is supplied from the active rectifier while reactive power, kVAr dynamics and short circuit current are supplied from the de-clutched generator. Main switchboard is operating constant voltage and constant frequency.

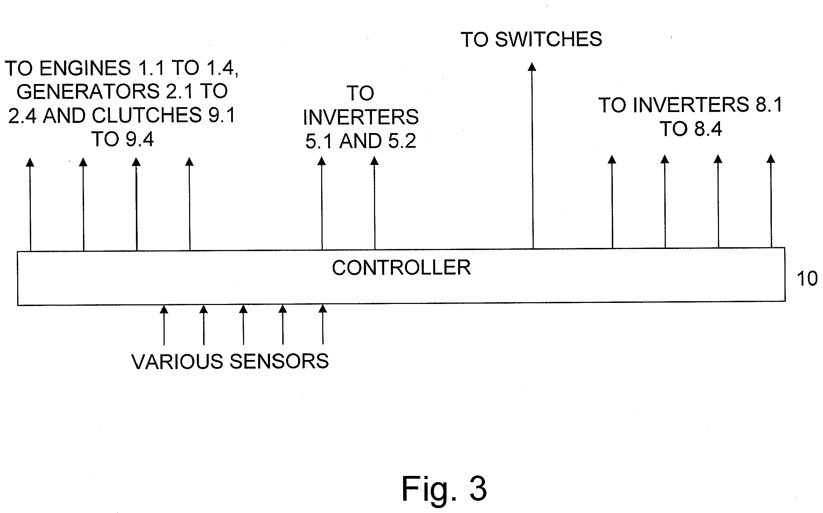

In the following, the measures according to the first embodiment are described in some more detail mainly by referring to Figs. 1 and 3.

The system according to the first embodiment comprises the following components: an inverter system supplying the vessel main grid (i.e., the main switchboard), a battery system, rotating phase compensator and a fuelled generating set for permanent power supply system.

### 1. Inverter system supplying the vessel main grid

This inverter system is designed for supplying needed power to the grid consumers, and is designed for parallel operation with diesel or dual fuel generation sets and/or a rotating phase compensation system (de-clutched generator set).

The inverter system is supplied from a battery source including a rectifier for battery charging. An example for the inverter system is the AC-DC/DC-AC converter 5.1 or 5.2 shown in Fig. 1.

### 2. Battery system

The battery system is designed for the defined operational modes, both with respect to power(kW) and capacity (kWh). The battery is connected to the DC link of the system. The battery power and capacity must be designed according to required propulsion needs and other consumption needs for the time it takes to reconnect one of the stand-by generator sets after a failure of the generator set in operation.

An example for the battery system is shown in Fig. 1 as the battery 4.1 or 4.2. Alternatively, instead (or in addition to) the battery, a supercapacitor may be applied.

### 3. Rotating phase compensation

A rotating phase compensation system (generator) is designed to fulfill the need for reactive power in the system (kVAr) voltage stability, dynamic need for kVAr during transient conditions (DOL (direct on line) starts, other load appliances, transformer inrushes) and main short-circuit current contribution. The generator may be declutched from the main engine during this operation.

In Fig. 1, each of the four generator sets shown on top of the drawing, connected to the buses A1 to B2 (main switchboard), may be used as the rotating phase compensation system. Between the engine 1.1, 1.2, 1.3, 1.4 and the corresponding generator 2.1, 2.2, 2.3, 2.4 of each genset a clutch 9.1, 9.2, 9.3, 9.4 is provided. Thus, one (or more) of the genset may be operated as the rotating phase compensation system (rotation phase compensator) by be opening the clutch (declutching) between the engine and the generator of the corresponding generator set. For example, when in Fig. 1 the generator 2.1 is applied as the rotating phase compensator, the clutch 9.1 between the engine 1.1 and the generator 2.1 would be opened, so that the generator 2.1 is de-clutched from the engine 1.1.

However, alternatively, the clutch between the generator and the engine may be omitted and the generator may be operated with a switched off engine.

### 4. Fuelled Generating Set for permanent power supply

As a minimum, one generator set must be in operation to supply the needed power over time and to keep the batteries charged. At a failure of this genset, the battery will supply the needed power in parallel with the rotating phase compensator until the standby genset has connected.

For example, in the arrangement of Fig. 1, the generator set consisting of the engine 1.3 and the generator 2.3 may be used for supplying the needed power. The generator set, which supplies power, may also be referred to as power supplying generator set.

In the following, main functionality and modes of operation according to the first embodiment are described. The control functions may be carried out by a controller 20 as shown in Fig. 3. The controller receives various detection signals from various sensors (not shown) (e.g., engine speeds, motor speeds, voltage and current measurements etc.) and supplies control signals to the different units and switches in the propulsion system such as the generator sets, inverters etc. The controller itself may be a computer including CPU, ROM, RAM and the like. Moreover, the controller may consist of different units, e.g., power management may be performed by one unit, and control of the propulsion units may be performed by another unit.

### First, low power operations are described (DP low, Harbour mode, low steaming, standby)

As mentioned above, a minimum of one system as described above needs to be in operation:
- One set of fuelled genset
- One set of rotating phase compensator (declutched genset for reactive power needs)
- One set of Battery supplied inverter system of suitable power.

For example, in the system of Fig. 1, the generator set consisting of the engine 1.1 and the generator 2.1 may be used as the rotation phase compensator (i.e., the generator 2.1 is declutched from the engine 1.1), and the generator set consisting of the engine 1.3 and the generator 2.3 is used for power supply, wherein the inverter 5.1 and the battery 4.1 are in operation.

Thus, normal operation during a low power demand is as follows:
- One genset supplies required power to all consumers (closed bus tie). That is, in this example the buslink 10 (consisting of suitable switches) is closed, so that the main switchboard (consisting of 690V/60 Hz busses A1, A2, B1 and B2 is fully connected, thereby achieving a closed bus tie.
- One inverter system connected to the other side of the bus tie is in operation. That is, in the example for Fig. 1, when the generator 2.1 is used as the rotation phase compensator, the inverter system 5.2 is in operation, whereas the inverter system 5.1 is out of operation.
- The highest possible load (constant load) is applied on the connected genset, and thereby the best efficiency is achieved.
- Constant load on genset is provided by using the inverter system for peak shaving and thereby improving efficiency.
- The batteries will be charged when required (Peakshaving). Thus the genset may be loaded to a higher power than in traditional power generation system, before the standby generator is connected.
- The declutched genset is operating as the rotation phase compensator, as described above. The power factor seen by the active genset (i.e., the genset by which power is generated) may be adjusted to 1.0. That is, the declutched genset (e.g., the generator 2.1) is operated such that, by considering the total load on the main switchboard (busses A1 to B2) for the active genset (e.g., engine 1.2 and generator 2.2) the power factor is 1.0, thus increasing the generator (2.2) efficiency. The power factor 1,0 is achieved by adjustment of the supply of the reactive power to the network from the de-clutched generator.
- Required redundancy in fault situations on the power generating segment is obtained by the battery assisted inverter and phase compensator still running on a different segment. For example, when a genset on bus B2 (e.g., engine 1.3 and generator 2.3) in Fig. 1) generates power and a failure occurs in this segement (i.e., in bus B2), a genset on bus A1 (e.g., generator 2.1 in Fig. 1) could still provide the phase compensation, also battery (4.1) and inverter (5.1) to be in operation when the bus link 10 (bus tie) is opened.
- The battery will have required energy to support necessary load until the standby genset is connected.
- In combination with the switchboard segment protection, a 75 % redundancy can be obtained e.g. in the LLC (Low Loss Concept - a diesel electric propulsion system by Wartsila) system - meaning all propellers in operation and 75% remaining power after a busbar or genset failure. That is, in the example of Fig. 3.1., four segments are provided, namely, busses A1, A2, B1 and B2. When a failure occurs in bus B2 (e.g., due to a failure in genset consisting of the engine 1.3 and the generator 2.3), this bus B2 will be isolated, and by means of the switches, the propulsion units consisting of the eletric motors 3.3 and 3.4 and speed controls 8.3 and 8.4, are still be connected to another segment, e.g., bus B1.

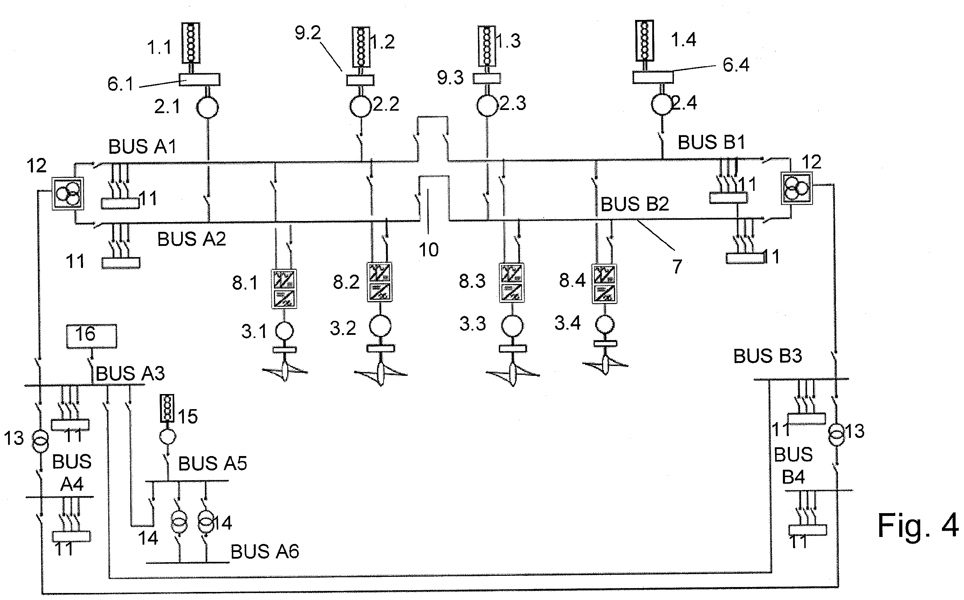

In the following, normal operation with high power demand is described.
- Several gensets supply required power to all consumers (closed or open bus tie). For example, in the system of Fig. 1, the gensets consisting of the engines 1.2, 1.3 and 1.4 and the generators 2.2, 2.3 and 2.4 may be in operation.
- One or more inverter systems are connected to the other side of the bus tie in operation. That is, in the example of Fig. 4, both inverters 5.1 and 5.2 may be in operation.
- The highest possible load (Constant load) is set on connected genset(s), and thereby the best efficiency is achieved.
- Constant load on genset by using the Inverter system for peak shaving and thereby improving efficiency.
- The batteries will be charged when required (Peakshaving). Thus the genset may be loaded to a higher power than in traditional power generation system, before the standby generator is connected.
- The declutched genset is operating as a phase compensator. The power factor seen by the engine driven generator may be adjusted to 1.0, as described above.
- Required Redundancy in fault situations on the power generating segment is obtained by the battery assisted inverter and phase compensator still running on the same or different segment.
- The battery will have required energy to support necessary load until the standby genset is connected.
- In combination with the switchboard segment protection, a 75 % redundancy can be obtained in the LLC system - meaning all propellers in operation and 75% remaining power after a busbar or genset failure.

In the following, failure modes are described, wherein a bus bar failure on starboard or port side is considered.

If a bus bar failure occurs, the affected segment will be isolated and leave the remaining healthy system in operation.

If the failure is on the side where the engine driven genset is operating, the Inverter system will supply required power to the system after disconnection of the faulty segment. The controller (the PMS (power management system) will limit the propulsion power to the available battery capacity until the standby genset has connected.

The standby genset may be the declutched generator set which will be in operation a few seconds after the failure since the generator is already synchronized.

Hence, according to the first embodiment, a reliable and fuel-efficient power supply for a propulsion system for a vessel is achieved.

### Second Embodiment

In the following, a second embodiment of the present invention is described by referring to Fig. 4. A main difference to the first embodiment is that between the generator and the prime mover in some or more gensets, a transmission is provided.

Thus, according to a general example for the second embodiment, a propulsion system for a vessel comprises at least one generator set including an prime mover and a generator, an electric propulsion unit an energy storage, a main switchboard by which the generator set, the electric propulsion unit and the energy storage are connected to each other, and a controller for controlling the propulsion system. Moreover, between the prime mover and the generator, a transmission is provided. The controller adjusts the rotational speed of the prime mover of the at least one generator set based on the electric power consumption and operates the transmission such that the speed of the generator is kept constant.

That is, for example, when a constant AC frequency of 60 Hz is to be maintained, the generator has to be driven by corresponding constant speed. Depending on the load, this could mean for the prime mover to operate at an inefficient operation point. Hence, the transmission can be operated such that the prime mover is operated at a high-efficient operation point, and the generator can still be driven with the necessary constant speed.

In the following, the measures according to the second embodiment are described in more detail by referring to the example shown in Fig. 4. The functions according to the second embodiment may be carried out by a controller similar as the controller 20 shown in Fig. 3.

In this example, a 2 Speed Gearbox is used, i.e., a transmission providing two different transmission ratios (Fig. 4).

Fig. 4 shows a propulsion system for a vessel similar to that as shown in Fig. 1, wherein in some of the gensets, the clutch shown in Fig. 1 is replaced by a two-speed gear. In more detail, between the engine 1.1 and the generator 2.1, now a two-speed gear 6.1 is provided, and between the engine 1.4 and the generator 2.4, now a two-speed gear 6.4 is provided. The two-speed gear may also include a clutch. In this specific example, the clutches 9.2 and 9.3 are provided between the engines 1.2 and 1.3 and the corresponding generators 2.2 and 2.3, similar as shown in Fig. 1.

The second embodiment is related to the following problem:
Genset fuel efficiency is at its peak when the load and rpm are both at design output and speed. The generator rpm is set to be producing a constant frequency for the network, for example 60Hz (can be anything else selected for the network). The generator has to rotate at constant speed. When the power requirement of the genset is lower the engine fuel amount has to be lowered which results in the combustion process to be transferred from the optimised state, which means lower fuel efficiency for producing a certain kWh.

A possible solution could be as follows:
Speed of the engine can be altered to match the amount of shaft power (kW) needed, which results also in better fuel efficiency at lower rpm. In conventional gensets this results also in a lower frequency of the produced AC (alternating current), which has to be compensated by converting the frequency of the current in a converter unit, which again lowers the fuel efficiency.

Hence, according to the present embodiment, the following solution is applied:
The genset includes a gearbox (e.g., two-speed gear 6.1 and 6.4 shown in Fig. 4) between the engine (e.g., a pressure or spark ignited medium speed engine) and the generator. The gearbox has at least two selectable transmission ratios: a first transmission ratio for the nominal electric power output and at least one second transmission ratio for the at least one second electric power output allowing the generator rpm to stay at the nominal speed producing the nominal frequency AC when the engine rpm is lowered to a speed at which the fuel efficiency is higher than at the combination of the first transmission ratio and a lowered power output.

Hence, according to the second embodiment, a fuel-efficient power supply for a propulsion system for a vessel is achieved.

The embodiments described above are only examples, and various modifications can be applied.

For example, the above-described embodiments may be combined. That is, the transmissions according to the second embodiment may be applied to the gensets according to the first embodiment, i.e., the clutch between the engine and the generator in some or all of the gensets may be modified such that declutching and providing two (or more) transmission ratios is possible.

As a further example, in the arrangement shown in Fig. 4, no clutches may be arranged between the engine 1.2 and the generator 2.2, and between the engine 1.3 and the generator 2.3, and the two-speed transmissions 6.1 and 6.4 may be maintained. In addition, one or more of the AC-DC/DC-AC converters 5.1 and 5.2 and energy storages 4.1 and 4.2 shown in Fig. 1 may be added to the arrangement shown in Fig. 4.

Furthermore, the specific arrangements of the propulsion system for a vessel as shown in Figs. 1, 2 and 4 are only examples, and arbitrary modifications are possible. For example, the main switchboard (e.g., the busses A1 to B2) is illustrated as an AC main switchboard. However, also a DC main switchboard (DC busses) is possible, wherein the inverters would have to be correspondingly modified.

Moreover, in the above embodiments, a power of 60 Hz is used. However, it may be possible to apply variable engine speeds (similar as in the second embodiment) according to a load demand, and to accept frequency of the power generated by the generators based on the variable engine speed within defined limits. That is, a power distribution system (i.e., the main switchboard and connected elements) may be designed such that is can accept the produced frequency (when the generator is driven with a variable engine speed) within defined limits. For example, a frequency range from 47 Hz to 63 Hz may be acceptable.

### LIST OF ABBREVIATIONS

- DOL: - Direct on line
- DP: - Dynamic positioning
- LLC: - Low Loss Concept
- PCS: - Phase compensating system
- PMS: - Power Management System
- PTI: - Power Take In
- PTO: - Power Take Out
- SLD: - Single Line Diagram

### REFERENCE LIST

In the drawings, the following reference numbers are used:
1 (1.1 to 1.4) Engine (e.g., diesel, gas, dual fuel engine or gas turbine)
2 (2.1 to 2.4) Generator
3 (3.1 to 3.4) Electric Motor
4 (4.1 to 4.2) Energy storage (e.g., supercapacitor or secondary battery)
5 (5.1 to 5.2) AC-DC/DC-AC converter
6 (6.1, 6.4) Gear box with clutch
7 Main switchboard
8 (8.1 to 8.4) Propeller rotational speed control
9 (9.1 to 9.4) clutch
10 buslink
11 feeders
12, 13, 14 transformers
15 generator set
20 controller
21 engine
22 motor/generator
23 two-speed clutch
24 propeller

## Claims

1. A propulsion system for a vessel comprising
at least two generator sets **(1.1 to 1.4),** each including a prime mover **(1.1 to 1.4)** and a generator **(2.1 to 2.4),**
an electric propulsion unit **(3.1 to 3.4)** and
an energy storage **(4.1, 4.2),**
a main switchboard **(7)** by which the at least two generator sets, the electric propulsion unit **(3.1 to 3.4)** and the energy storage **(4.1, 4.2)** are connected to each other, and
a controller **(10)** for controlling the propulsion system, wherein
the controller **(10)** is configured to cause storing excess electrical power in the energy storage **(4.1, 4.2)** when a generator **(2.1 to 2.4)** of one of the at least two generator sets produces electric power in excess for the instantaneous needs of the vessel, and taking needed additional energy from the energy storage **(4.1, 4.2)** for the use of the ship electricity network when a generator **(2.1 to 2.4)** of one of the at least two generator sets produces electric power instantaneously insufficiently, and
to operate a generator **(2.1 to 2.4)** of one of the at least two generator sets as a phase compensator for supplying reactive power to the propulsion system, wherein
the generator **(2.1 to 2.4)** operated as a phase compensator is connected to the prime mover **(1.1 to 1.4)** via a clutch **(9.1 to 9.4),** and
the controller **(10)** is configured to de-clutch the generator **(2.1 to 2.4)** from the prime mover **(1.1 to 1.4)** when the generator **(2.1 to 2.4)** is operated as the phase compensator, and,
when a failure occurs in the power supplying generator set, to re-clutch the generator **(2.1 to 2.4)** operated as the phase compensator with its prime mover **(1.1 to 1.4)** and to operate this generator set as a new power supplying generator set.

2. The system according to claim 1, wherein
the main switchboard **(7)** comprises switchboard segments **(A1, A2, B1, B2)** connected via switches for isolating a switchboard segment in case of a failure in this segment.

3. The system according to claim 2, wherein
the electric propulsion unit **(3.1 to 3.4)** is connectable to at least two switchboard segments **(A1, A2, B1, B2)** via switches.

4. The system according to any one of the claims 1 to 3, wherein
the controller **(10)** is configured to provide variable engine speed according to load demand and
to accept a frequency of the power generated by the generators **(2.1 to 2.4)** based on the variable engine speed within defined limits.

5. The system according to any one of the claims 1 to 4, wherein the energy storage **(4.1, 4.2)** comprises a battery and/or a supercapacitor.

6. The system according to any one of the claims 1 to 5, wherein the prime mover **(1.1 to 1.4)** is an internal combustion engine.

7. A method for controlling a propulsion system for a vessel, the propulsion system comprising at least two generator sets, each including an prime mover **(1.1 to 1.4)** and a generator **(2.1 to 2.4),** an electric propulsion unit **(3.1 to 3.4),** an energy storage **(4.1, 4.2),** and a main switchboard **(7)** by which the at least two generator sets, the electric propulsion unit **(3.1 to 3.4)** and the energy storage **(4.1, 4.2)** are connected to each other, the method comprising
storing excess electrical power in the energy storage **(4.1, 4.2)** when a generator **(2.1 to 2.4)** of one of the at least two generator sets produces electric power in excess for the instantaneous needs of the vessel,
taking needed additional energy from the energy storage **(4.1, 4.2)** for the use of the ship electricity network when a generator **(2.1 to 2.4)** of one of the at least two generator sets produces electric power instantaneously insufficiently, and
operating a generator **(2.1 to 2.4)** of one of the at least two generator sets as a phase compensator for supplying reactive power to the propulsion system,
wherein the generator **(2.1 to 2.4)** operated as a phase compensator is connected to the prime mover **(1.1 to 1.4)** via a clutch **(9.1 to 9.4)** and the method further comprises
de-clutching the generator **(2.1 to 2.4)** from the prime mover **(1.1 to 1.4)** when the generator **(2.1 to 2.4)** is operated as the phase compensator, and,
when a failure occurs in the power supplying generator set, re-clutching the generator **(2.1 to 2.4)** operated as the phase compensator with its prime mover **(1.1 to 1.4)** and operating this generator set as a new power supplying generator set.

8. The method according to claim 7, wherein
the main switchboard **(7)** comprises switchboard segments (**A1, A2, B1, B2)** connected via switches, the method further comprising
isolating a switchboard segment in case of a failure in a segment by operating the switches correspondingly.

9. The method according to claim 8, wherein
the electric propulsion unit **(3.1 to 3.4)** is connectable to at least two switchboard segments (**A1, A2, B1, B2)** via switches.

10. The method according to any one of the claims 7 to 9, further comprising
providing variable engine speeds according to a load demand and
accepting a frequency of the power generated by the generators **(2.1 to 2.4)** based on the variable engine speed within defined limits.

11. The method according to any one of the claims 7 to 10, wherein the energy storage **(4.1, 4.2)** comprises a battery and/or a supercapacitor.

12. The method according to any one of the claims 7 to 11, wherein the prime mover **(1.1 to 1.4)** is an internal combustion engine.

## Patentansprüche

1. Antriebssystem für ein Schiff mit
zumindest zwei Generatorsätzen **(1.1 bis 1.4),** die jeweils eine Antriebsmaschine **(1.1 bis 1.4)** und einen Generator **(2.1 bis 2.4)** aufweisen,
einer elektrischen Antriebseinheit **(3.1 bis 3.4),**
einem Energiespeicher **(4.1, 4.2),**
einer Hauptschaltanlage **(7),** durch die die zumindest zwei Generatorsätze, die elektrische Antriebseinheit **(3.1 bis 3.4)** und der Energiespeicher **(4.1, 4.2)** miteinander verbunden werden, und
einer Steuerungseinrichtung **(10)** zur Steuerung des Antriebssystems, wobei
die Steuerungseinrichtung **(10)** konfiguriert ist, zu bewirken, dass überschüssige elektrische Leistung in dem Energiespeicher **(4.1, 4.2)** gespeichert wird, wenn ein Generator **(2.1 bis 2.4)** von einem der zumindest zwei Generatorsätze für den momentanen Bedarf des Schiffs überschüssige elektrische Leistung erzeugt, und benötigte zusätzliche Energie aus dem Energiespeicher **(4.1, 4.2)** für die Verwendung des Schiffelektrizitätsnetzwerks zu entnehmen, wenn ein Generator **(2.1 bis 2.4)** von einem der zumindest zwei Generatorsätze elektrische Leistung erzeugt, die momentan unzureichend ist, und
einen Generator **(2.1 bis 2.4)** von einem der zumindest zwei Generatorsätze als eine Phasenkompensationseinrichtung zu betreiben, um reaktive Leistung dem Antriebssystem zuzuführen, wobei
der Generator **(2.1 bis 2.4),** der als Phasenkompensationseinrichtung betrieben wird, mit der Antriebsmaschine **(1.1 bis 1.4)** über eine Kupplung **(9.1 bis 9.4)** verbunden ist, und
die Steuerungseinrichtung **(10)** konfiguriert ist, den Generator **(2.1 bis 2.4)** von der Antriebsmaschine **(1.1 bis 1.4)** zu entkuppeln, wenn der Generator **(2.1 bis 2.4)** als die Phasenkompensationseinrichtung betrieben wird, und,
wenn ein Fehler in dem Leistung zuführenden Generatorsatz auftritt, den Generator **(2.1 bis 2.4),** der als die Phasenkompensationseinrichtung betrieben wird, mit der Antriebsmaschine **(1.1 bis 1.4)** erneut zu kuppeln und diesen Generatorsatz als einen neuen Leistung zuführenden Generatorsatz zu betreiben.

2. System nach Anspruch 1, wobei
die Hauptschaltanlage **(7)** Schaltanlagensegmente **(A1, A2, B1, B2)** aufweist, die über Schalter verbunden sind, um ein Schaltanlagensegment im Falles eines Fehlers in diesem Segment zu isolieren.

3. System nach Anspruch 2, wobei
die elektrische Antriebseinheit **(3.1 bis 3.4)** mit zumindest zwei Schaltanlagensegmente **(A1, A2, B1, B2)** über Schalter verbindbar ist.

4. System nach einem der Ansprüche 1 bis 3, wobei
die Steuerungseinrichtung **(10)** konfiguriert ist, eine variable Maschinengeschwindigkeit entsprechend einer Lastanforderung bereitzustellen, und
eine Frequenz der Leistung, die durch die Generatoren **(2.1 bis 2.4)** erzeugt wird, auf der Grundlage der variablen Maschinengeschwindigkeit innerhalb definierter Grenzen zu akzeptieren.

5. System nach einem der Ansprüche 1 bis 4, wobei der Energiespeicher **(4.1, 4.2)** eine Batterie und/oder einen Suprakondensator aufweist.

6. System nach einem der Ansprüche 1 bis 5, wobei die Antriebsmaschine **(1.1 bis 1.4)** eine Brennkraftmaschine ist.

7. Verfahren zur Steuerung eines Antriebssystems für ein Schiff, wobei das Antriebssystem zumindest zwei Generatorsätze, die jeweils eine Antriebsmaschine **(1.1 bis 1.4)** und einen Generator **(2.1 bis 2.4)** aufweisen, eine elektrische Antriebseinheit **(3.1 bis 3.4),** einen Energiespeicher **(4.1, 4.2)** und eine Hauptschaltanlage **(7)** aufweist, durch die die zumindest zwei Generatorsätze, die elektrische Antriebseinheit **(3.1 bis 3.4)** und der Energiespeicher **(4.1, 4.2)** miteinander verbunden werden, wobei das Verfahren aufweist:
Speichern überschüssiger elektrischer Leistung in dem Energiespeicher **(4.1, 4.2),** wenn ein Generator **(2.1 bis 2.4)** von einem der zumindest zwei Generatorsätze für den momentanen Bedarf des Schiffs überschüssige elektrische Leistung erzeugt,
Entnehmen benötigter zusätzlicher Energie aus dem Energiespeicher **(4.1, 4.2)** für die Verwendung des Schiffelektrizitätsnetzwerks, wenn ein Generator **(2.1 bis 2.4)** von einem der zumindest zwei Generatorsätze elektrische Leistung erzeugt, die momentan unzureichend ist, und
Betreiben eines Generators **(2.1 bis 2.4)** von einem der zumindest zwei Generatorsätze als eine Phasenkompensationseinrichtung, um reaktive Leistung dem Antriebssystem zuzuführen,
wobei der Generator **(2.1 bis 2.4),** der als Phasenkompensationseinrichtung betrieben wird, mit der Antriebsmaschine **(1.1 bis 1.4)** über eine Kupplung **(9.1 bis 9.4)** verbunden ist, und das Verfahren weiterhin aufweist:
Entkuppeln des Generators **(2.1 bis 2.4)** von der Antriebsmaschine **(1.1 bis 1.4),** wenn der Generator **(2.1 bis 2.4)** als die Phasenkompensationseinrichtung betrieben wird, und,
wenn ein Fehler in dem Leistung zuführenden Generatorsatz auftritt, erneutes Kuppeln des Generators **(2.1 bis 2.4),** der als die Phasenkompensationseinrichtung betrieben wird, mit der Antriebsmaschine **(1.1 bis 1.4)** und Betreiben dieses Generatorsatzes als einen neuen Leistung zuführenden Generatorsatz.

8. Verfahren nach Anspruch 7, wobei
die Hauptschaltanlage **(7)** Schaltanlagensegmente **(A1, A2, B1, B2)** aufweist, die über Schalter verbunden sind, wobei das Verfahren weiterhin aufweist:
Isolieren eines Schaltanlagensegments im Falles eines Fehlers in diesem Segment durch entsprechendes Betrieben der Schalter.

9. Verfahren nach Anspruch 8, wobei
die elektrische Antriebseinheit **(3.1 bis 3.4)** mit zumindest zwei Schaltanlagensegmente **(A1, A2, B1, B2)** über Schalter verbindbar ist.

10. Verfahren nach einem der Ansprüche 7 bis 9, weiterhin mit
Bereitstellen variabler Maschinengeschwindigkeiten entsprechend einer Lastanforderung und
Akzeptieren einer Frequenz der Leistung, die durch die Generatoren **(2.1 bis 2.4)** erzeugt wird, auf der Grundlage der variablen Maschinengeschwindigkeit innerhalb definierter Grenzen.

11. Verfahren nach einem der Ansprüche 7 bis 10, wobei der Energiespeicher **(4.1, 4.2)** eine Batterie und/oder einen Suprakondensator aufweist.

12. Verfahren nach einem der Ansprüche 7 bis 11, wobei die Antriebsmaschine **(1.1 bis 1.4)** eine Brennkraftmaschine ist.

## Revendications

1. Système de propulsion pour un navire qui comprend
au moins deux ensembles de génératrice (1.1 à 1.4), qui comprennent chacun un moteur d'entraînement (1.1 à 1.4) et une génératrice (2.1 à 2.4),
une unité de propulsion électrique (3.1 à 3.4) et
un dispositif de stockage d'énergie (4.1, 4.2),
un tableau de distribution principal (7) par lequel lesdits au moins deux ensembles de génératrice, l'unité de propulsion électrique (3.1 à 3.4) et le dispositif de stockage d'énergie (4.1, 4.2) sont connectés les uns aux autres, et
un contrôleur (10) pour commander le système de propulsion, dans lequel
le contrôleur (10) est configuré pour provoquer le stockage de l'énergie électrique en excès dans le dispositif de stockage d'énergie (4.1, 4.2) lorsqu'une génératrice (2.1 à 2.4) de l'un desdits au moins deux ensembles de génératrice produit de l'énergie électrique en excès pour les besoins instantanés du navire, et pour prélever l'énergie supplémentaire nécessaire dans le dispositif de stockage d'énergie (4.1, 4.2) pour une utilisation dans le réseau d'électricité du navire lorsqu'une génératrice (2.1 à 2.4) de l'un desdits au moins deux ensembles de génératrice produit une énergie électrique instantanément insuffisante, et
pour mettre en oeuvre une génératrice (2.1 à 2.4) de l'un desdits au moins deux ensembles de génératrice en tant que compensateur de phase pour fournir une énergie réactive au système de propulsion, dans lequel
la génératrice (2.1 à 2.4) mise en oeuvre en tant que compensateur de phase est reliée au moteur d'entraînement (1.1 à 1.4) par l'intermédiaire d'un embrayage (9.1 à 9.4), et
le contrôleur (10) est configuré pour débrayer la génératrice (2.1 à 2.4) du moteur d'entraînement (1.1 à 1.4) lorsque la génératrice (2.1 à 2.4) est mise en oeuvre en tant que compensateur de phase, et,
lorsqu'une défaillance se produit dans l'ensemble de génératrice de fourniture d'énergie, pour ré-embrayer la génératrice (2.1 à 2.4) mise en oeuvre en tant que compensateur de phase avec son moteur d'entraînement (1.1 à 1.4) et pour mettre en oeuvre cet ensemble de génératrice en tant que nouvel ensemble de génératrice de fourniture d'énergie.

2. Système selon la revendication 1, dans lequel
le tableau de distribution principal (7) comprend des segments de tableau de distribution (A1, A2, B1, B2) connectés par l'intermédiaire de commutateurs pour isoler un segment de tableau de distribution dans le cas d'une défaillance dans ce segment.

3. Système selon la revendication 2, dans lequel
l'unité de propulsion électrique (3.1 à 3.4) peut être connectée à au moins deux segments de tableau de distribution (A1, A2, B1, B2) par l'intermédiaire de commutateurs.

4. Système selon l'une quelconque des revendications 1 à 3, dans lequel
le contrôleur (10) est configuré pour obtenir une vitesse de moteur variable en fonction de la demande de charge, et
pour accepter une fréquence de l'énergie générée par les génératrices (2.1 à 2.4) sur la base de la vitesse de moteur variable dans des limites définies.

5. Système selon l'une quelconque des revendications 1 à 4, dans lequel le dispositif de stockage d'énergie (4.1, 4.2) comprend une batterie et/ou un supercondensateur.

6. Système selon l'une quelconque des revendications 1 à 5, dans lequel le moteur d'entraînement (1.1 à 1.4) est un moteur à combustion interne.

7. Procédé pour commander un système de propulsion pour un navire, dans lequel le système de propulsion comprend au moins deux ensembles de génératrice, qui comprennent chacun un moteur d'entraînement (1.1 à 1.4) et une génératrice (2.1 à 2.4), une unité de propulsion électrique (3.1 à 3.4), un dispositif de stockage d'énergie (4.1, 4.2), et un tableau de distribution principal (7) par lequel lesdits au moins deux ensembles de génératrice, l'unité de propulsion électrique (3.1 à 3.4) et le dispositif de stockage d'énergie (4.1, 4.2) sont connectés les uns aux autres, dans lequel le procédé comprend
le stockage de l'énergie électrique en excès dans le dispositif de stockage d'énergie (4.1, 4.2) lorsqu'une génératrice (2.1 à 2.4) de l'un desdits au moins deux ensembles de génératrice produit de l'énergie électrique en excès pour les besoins instantanés du navire,
le prélèvement de l'énergie supplémentaire nécessaire dans le dispositif de stockage d'énergie (4.1, 4.2) pour une utilisation dans le réseau d'électricité du navire lorsqu'une génératrice (2.1 à 2.4) de l'un desdits au moins deux ensembles de génératrice produit une énergie électrique instantanément insuffisante, et
la mise en oeuvre d'une génératrice (2.1 à 2.4) de l'un desdits au moins deux ensembles de génératrice en tant que compensateur de phase pour fournir une énergie réactive au système de propulsion,
dans lequel la génératrice (2.1 à 2.4) mise en oeuvre en tant que compensateur de phase est reliée au moteur d'entraînement (1.1 à 1.4) par l'intermédiaire d'un embrayage (9.1 à 9.4) et le procédé comprend en outre
le débrayage de la génératrice (2.1 à 2.4) du moteur d'entraînement (1.1 à 1.4) lorsque la génératrice (2.1 à 2.4) est mise en oeuvre en tant que compensateur de phase, et,
lorsqu'une défaillance se produit dans l'ensemble de génératrice de fourniture d'énergie, le réembrayage de la génératrice (2.1 à 2.4) mise en oeuvre en tant que compensateur de phase avec son moteur d'entraînement (1.1 à 1.4) et la mise en oeuvre de cet ensemble de génératrice en tant que nouvel ensemble de génératrice de fourniture d'énergie.

8. Procédé selon la revendication 7, dans lequel
le tableau de distribution principal (7) comprend des segments de tableau de distribution (A1, A2, B1, B2) connectés par l'intermédiaire de commutateurs, dans lequel le procédé comprend en outre
l'isolement d'un segment de tableau de distribution dans le cas d'une défaillance dans un segment en commandant les commutateurs en correspondance.

9. Procédé selon la revendication 8, dans lequel
l'unité de propulsion électrique (3.1 à 3.4) peut être connectée à au moins deux segments de tableau de distribution (A1, A2, B1, B2) par l'intermédiaire de commutateurs.

10. Procédé selon l'une quelconque des revendications 7 à 9, qui comprend en outre
l'obtention de vitesses de moteur variables conformément à une demande de charge, et
l'acceptation d'une fréquence de l'énergie générée par les génératrices (2.1 à 2.4) sur la base de la vitesse de moteur variable dans des limites définies.

11. Procédé selon l'une quelconque des revendications 7 à 10, dans lequel le dispositif de stockage d'énergie (4.1, 4.2) comprend une batterie et/ou un supercondensateur.

12. Procédé selon l'une quelconque des revendications 7 à 11, dans lequel le moteur d'entraînement (1.1 à 1.4) est un moteur à combustion interne.
